# EUROPEAN PATENT APPLICATION

(11) **EP 1 302 841 A2**
(43) Date of publication of application: **16.04.2003**
(21) Application number: 02022424.2
(22) Date of filing: 04.10.2002
(51) Int. Cl.: G06F 3/033

(54) **Input system**

(30) Priority: 10.10.2001 JP 2001312468
(71) Applicant: Wacom Co., Ltd, Kitasaitama-Gun, 349-1148 Saitama-Ken (JP)
(72) Inventor: Kawasome, Toshiki, Souka-Shi, Saitama-Ken (JP)
(74) Representative: Paul, Dieter-Alfred, Dipl.-Ing.

(57) **Abstract**

An input system is configured of a display having a display screen, a pen tablet having an operating region, an input device, and a computer to which the display, tablet, and input device are connected. The tablet is for performing operations with regard to a region to be operated within a display region displayed on the display screen.
The region to be operated is set so as to correspond to the operating region, and the region to be operated can be enlarged, reduced, or moved, by operations made at the input device. Thus, the freedom in setting the position and size of the region to be operated by the tablet increases, thereby providing an input system with improved ease-of-use of a pen tablet.

## Description

### BACKGROUND OF THE INVENTION

### 1. Field of the Invention

The present invention relates to an input system having an input device comprising a finite operating region, and to a program for controlling the input system, and to a recording medium storing the program.

### 2. Description of the Related Art

The mouse and trackball are conventionally known pointing devices which are connected to a computer, as is the pen tablet.

Generally, a pen tablet operates by generating input signals by detecting the position of an inputting pen in an operating region provided on the tablet, which are output to a computer. In the computer, a region to be operated on the display screen is set beforehand, corresponding to the operating region of the tablet. The computer accepts input signals from the pen tablet as operations made with regard to the region to be operated.

In this way, the position of the inputting pen in the operating region of the pen tablet, and operations in the region to be operated, correspond as set beforehand. Accordingly, the pen tablet has excellent sense-of-operation unmatched by other pointing devices, making it a desirable input device capable of intuitive input operations, and the ease-of-use thereof has earned high commendations.

However, with computers to which the above-described conventional pen tablet has been connected, the position and size of the region to be operated which corresponds to the operating region is fixed to the preset state, and there is the problem that the settings for the region to be operated must be redone in order to perform operations with a pen tablet in areas other than the set region to be operated.

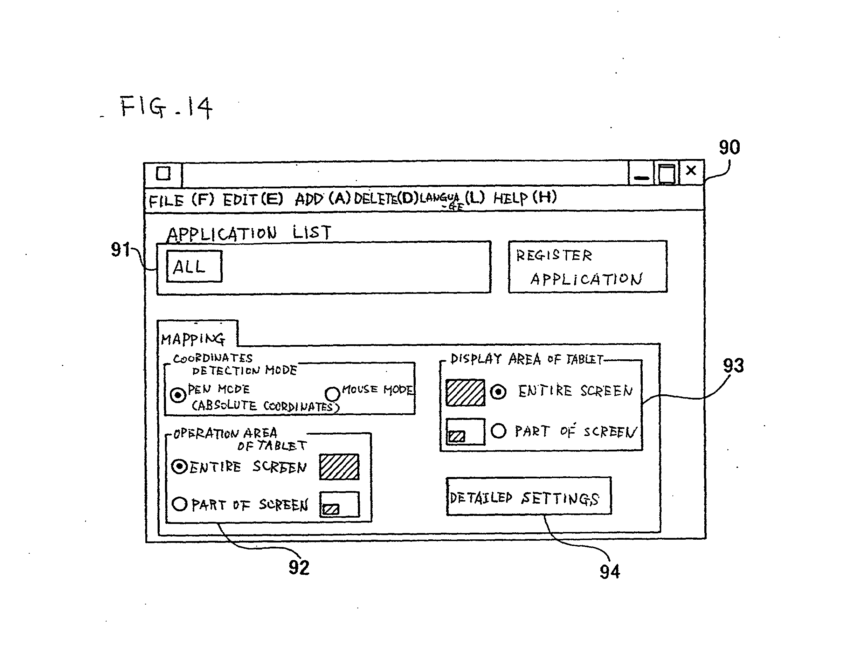

Now, an example will be given to describe how settings are generally made for the region to be operated as to the pen tablet. Fig. 14 illustrates a setting screen 90 as an example of a screen for setting the region to be operated of the pen tablet.

As shown in Fig. 14, in the setting screen 90, a list of application programs to be operated using the pen tablet are displayed in an application list display portion 91. In the example shown in Fig. 14, settings have been made to the effect that the pen tablet is to be used for all application programs executed by the computer to which the pen tablet is connected.

Also, whether or not all of the operating region of the tablet will be used at the time of operating the application programs displayed in the application list display portion 91 is set by a radio button or the like in an operating area setting portion 92.

Further, in a display area setting portion 93 situated in the settings screen 90, whether the region on the screen to be correlated with the operating region of the tablet is to be the entire screen, or part of the screen, is set. Moreover, in the event of correlating a part of the screen, detailed settings are performed by operating the detailed settings button 94.

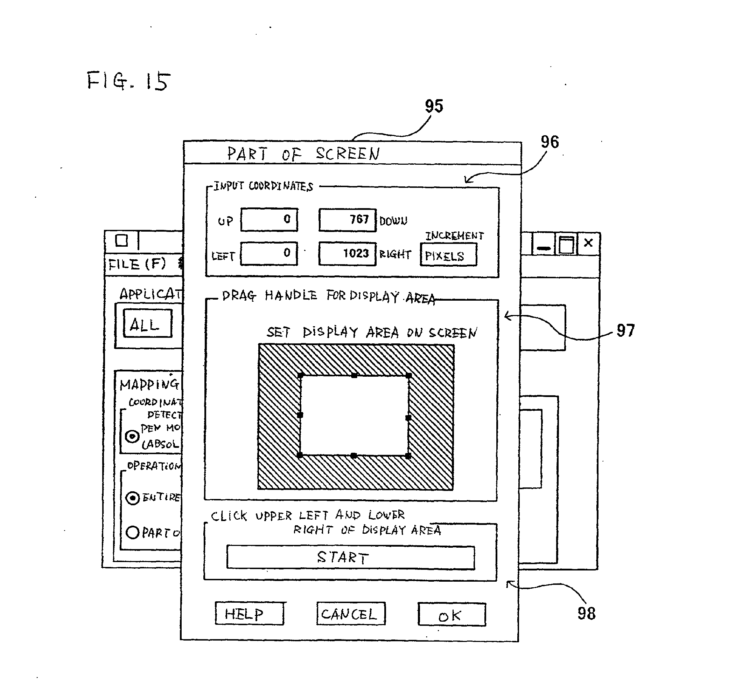

That is to say, operating the detailed settings button 94 brings up a pop-up window on the settings screen 90, which is the detailed settings screen 95 such as shown in Fig. 15, containing a coordinates input setting portion 96, a dragging operation setting portion 97, a clicking operation setting portion 98, and so forth.

In the coordinates input setting portion 96, the region to be operated on the display screen, to be correlated with the operating region of the tablet, can be set by coordinates on the screen. Also, in the dragging operation setting portion 97, the region to be operated is set by adjusting the position and size of a frame representing the region to be operated on the screen. Further, with the clicking operating setting portion 98, a rectangular region having two points as the upper left and lower right corners is set as the region to be operated, by operating operations for specifying the two arbitrary points on the display screen.

In this way, conventionally, in the event of using a pen tablet, the position and size of the region to be operated corresponding to the operating region of the tablet has been fixed to the state set by the settings screen 90 or the like beforehand. In the event that the user desired to change the position or size of the region to be operated, the user is required to redo the setting operations using the settings screen 90.

However, as described above, the operations for setting the region to be operated are troublesome, and the need to repeat such settings has depreciated the ease-of-use of the pen tablet.

### SUMMARY OF THE INVENTION

Accordingly, it is an object of the present invention to improve the freedom of the region to be operated by the pen tablet and the size thereof, and to improve the ease-of-use of using the pen tablet, with computers to which a pen tablet is connected.

To this end, the present invention has been made as described below. Note that examples of configurations corresponding to embodiments of the invention are referred to in parenthesis. The reference numerals given here are the reference numerals used in the later-described drawings.

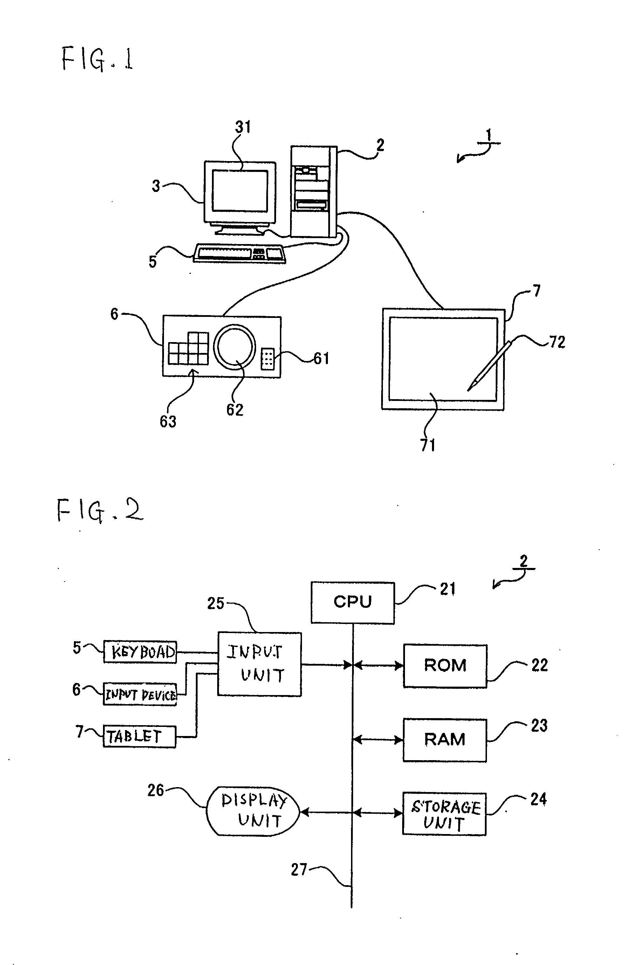

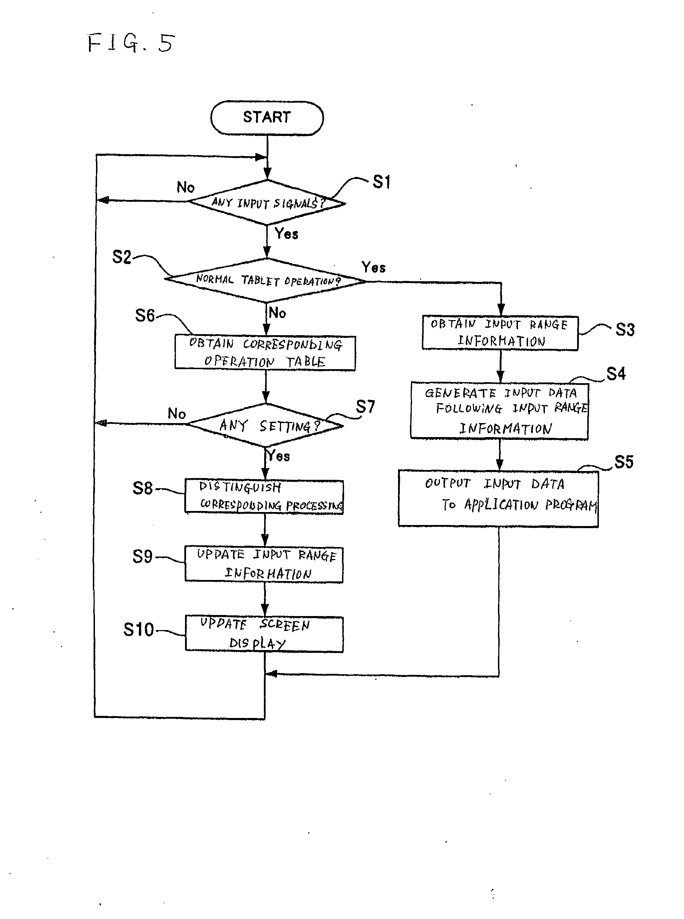

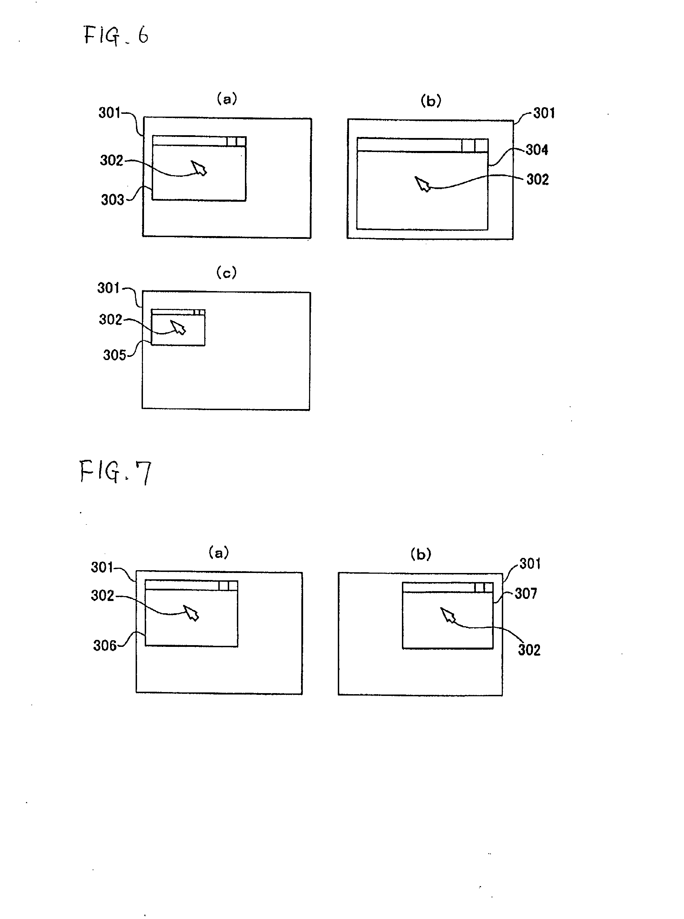

An input system according to a first aspect of the present invention comprises: a first input device (e.g., the tablet 7 shown in Fig. 1) for using a finite operating region (e.g., the operating region 71 shown in Fig. 1) to perform input operations to a region to be operated (e.g., the region to be operated 303 shown in Fig. 6A) which is positioned on a display screen (e.g., the display region 301 shown in Fig. 6A), correlated with the operating region; a second input device (e.g., the input device 6 shown in Fig. 1) for performing input operations different to input operation by the first input device; and an input control device (e.g., the computer 2 which performs the processing shown in Fig. 5) for changing the positioning state of the region to be operated on the display screen, according to input operations by the second input device.

Note that the second input device is not particularly restricted in any way as long as input operations, which can be distinguished from the input operations of the first input device to the region to be operated, can be carried out, and accordingly may be configured integrally with the first input device or configured separately, and further, may be of a configuration wherein a single input device functions as both the first input device and the second input device.

With the input system according to the first aspect of the present invention, input operations are performed with regard to the region to be operated which is situated on the display screen corresponding to the operating region, with the first input device using the finite operating region, and input operations different to the input operations made by the first input device with the second input device, while changing the display state of the region to be operated on the display screen, by enlarging, reducing, moving, etc., for example according to the input operations made by the second input device with the input control device.

Accordingly, the region to be operated which corresponds to the operating region which the first input device uses can be changed by the second input device, and the first input device can be used while arbitrarily changing the region to be operated. Accordingly, the positioning state such as the position of the region to be operated or the size thereof or the like is not essentially restricted, so the freedom of the region to be operated is markedly increased, and ease-of-use for using the first input device can be improved.

Also, with the input system according to the first aspect of the present invention, the input control device may move the region to be operated according to input operations by the second input device.

With such a configuration, the input control device moves the region to be operated according to input operations by the second input device, so the region to be operated that corresponds to the operating region which the first input device uses can be readily moved in an arbitrary direction on the screen. Accordingly, input operations can be made to arbitrary positions on the entire display screen, so the freedom of the region to be operated is increased even further, and further ease-of-use can be achieved.

Also, with the input system according to the first aspect of the present invention, the input control device may enlarge or reduce the region to be operated according to input operations by the second input device.

With such a configuration, the input control device enlarges or reduces the region to be operated according to input operations by the second input device, so the region to be operated that corresponds to the operating region which the first input device uses can be readily enlarged or reduced to an arbitrary size on the screen. Accordingly, the region for performing input operations by the first input device can be easily adjusted, achieving further ease-of-use.

Also, with the input system according to the first aspect of the present invention, the input control device may switch the position of the region to be operated to one of a plurality of positions set on the display screen beforehand, according to input operations by the second input device.

With such a configuration, the input control device changes the position of the region to be operated to one of a plurality of positions set on the display screen beforehand, according to input operations by the second input device, so the region to be operated that corresponds to the operating region which the first input device uses can be can be made to jump between positions that are not close one to another. Further, adjusting and setting optimal positions and sizes for the region to be operated beforehand allows the state of the region to be operated to be optimized with simple operations, thereby further improving ease-of-use.

A program according to a second aspect of the present invention causes a computer (2), to which are connected a first input device (e.g., the tablet 7 shown in Fig. 1) for using a finite operating region (e.g., the operating region 71 shown in Fig. 1) to perform input operations to a region to be operated (e.g., the region to be operated 303 shown in Fig. 6A) which is positioned on a display screen (e.g., the display region 301 shown in Fig. 6A), correlated with the operating region and a second input device (e.g., the input device 6 shown in Fig. 1) for performing input operations different to input operation by the first input device, to execute input control processing for changing the positioning state of the region to be operated on the display screen, according to input operations by the second input device.

With the program according to the second aspect of the present invention, input control processing is executed for changing the positioning state of the region to be operated on the display screen according to input operations by the second input device, by a computer to which are connected a first input device for using a finite operating region to perform input operations to a region to be operated which is positioned on a display screen, correlated with said operating region, and a second input device for performing input operations different to input operation by said first input device, so with this computer, the region to be operated which corresponds to the operating region which the first input device uses can be changed by the second input device, and the first input device can be used while arbitrarily changing the region to be operated. Accordingly, the positioning state such as the position of the region to be operated or the size thereof or the like is essentially unrestricted, so the freedom of the region to be operated is markedly increased, and ease-of-use for using the first input device can be improved.

Also, the program according to the second aspect of the present invention may cause execution of processing including processing for moving the region to be operated according to input operations by the second input device, as the input control processing.

With such a configuration, a computer executes processing including processing for moving the region to be operated according to input operations by the second input device as the input control processing, so with this computer, the region to be operated that corresponds to the operating region which the first input device uses can be readily moved in an arbitrary direction on the screen. Accordingly, input operations can be made to arbitrary positions on the entire display screen, so the freedom of the region to be operated is increased even further, and further ease-of-use can be achieved.

Also, the program according to the second aspect of the present invention may cause execution of processing including processing for enlarging or reducing the region to be operated according to input operations by the second input device, as the input control processing.

With such a configuration, a computer executes processing including processing for enlarging or reducing the region to be operated according to input operations by the second input device as the input control processing, so with this computer, the region to be operated that corresponds to the operating region which the first input device uses can be readily enlarged or reduced to an arbitrary size on the screen. Accordingly, the region for performing input operations by the first input device can be easily adjusted, achieving further ease-of-use.

Also, the program according to the second aspect of the present invention may cause execution of processing including processing for switching the position of the region to be operated to one of a plurality of positions set on the display screen beforehand, according to input operations by the second input device, as the input control processing.

With such a configuration, a computer executes processing including processing for switching the position of the region to be operated to one of a plurality of positions set on the display screen beforehand, according to input operations by the second input device as the input control processing, so with this computer, the region to be operated that corresponds to the operating region which the first input device uses can be can be made to jump between positions that are not close one to another by simple operations with the second input device. Further, adjusting and setting optimal positions and sizes for the region to be operated beforehand allows the state of the region to be operated to be optimized with simple operations, thereby further improving ease-of-use.

A recording medium according to a third aspect of the present invention stores the above-described program. Thus, using the recording medium according to the third aspect of the present invention with regard to a computer yields the above advantages.

### BRIEF DESCRIPTION OF THE DRAWINGS

Fig. 1 is a diagram illustrating a schematic configuration of an input system 1 according to a first embodiment to which the present invention has been applied;
Fig. 2 is a block diagram illustrating a functional configuration of the computer 2 shown in Fig. 1;
Fig. 3 is a diagram illustrating, in model fashion, the configuration of input range information 241 which is stored in a storage unit 24 shown in Fig. 2;
Fig. 4 is a diagram illustrating, in model fashion, the configuration of an input range changing table 242 which is stored in a storage unit 24 shown in Fig. 2;
Fig. 5 is a flowchart illustrating the operations of the computer 2 shown in Fig. 1;
Figs. 6A through 6C are diagrams illustrating the change in the region to be operated in a display region 301 displayed on a display screen 31 shown in Fig. 1, wherein
Fig. 6A shows a region to be operated 303 in the initial state thereof;
Fig. 6B shows a state wherein the region to be operated 303 shown in Fig. 6A has been enlarged and changed into a region to be operated 304;
Fig. 6C shows a state wherein the region to be operated 303 shown in Fig. 6A has been reduced and changed into a region to be operated 305;
Figs. 7A and 7B are diagrams illustrating the change in the region to be operated in a display region 301 displayed on a display screen 31, wherein
Fig. 7A shows a region to be operated 306 in the initial state thereof;
Fig. 7B shows a state wherein the region to be operated 306 shown in Fig. 7A has been moved and changed into a region to be operated 307;

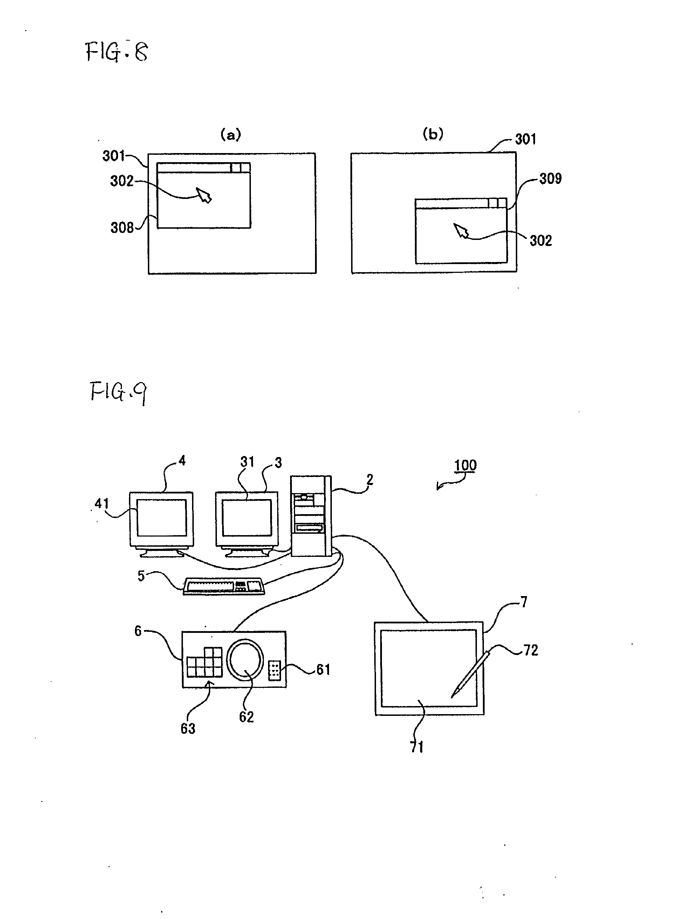

Figs. 8A and 8B are diagrams illustrating the change in the region to be operated in a display region 301 displayed on a display screen 31, wherein
Fig. 8A shows a region to be operated 308 in the initial state thereof;
Fig. 8B shows a state wherein the region to be operated 308 shown in Fig. 8A has had the position thereof switched and changed into a region to be operated 309;
Fig. 9 is a diagram illustrating a schematic configuration of an input system 100 according to a second embodiment to which the present invention has been applied;

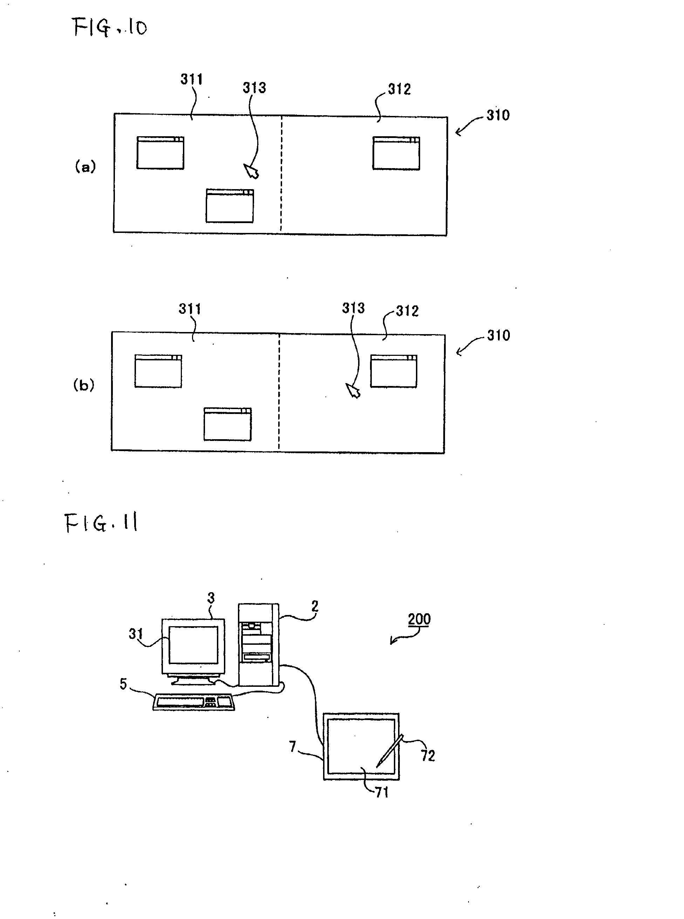

Figs. 10A and 10B are diagrams illustrating the change in the region to be operated in a display region 310 displayed on a display screen 31 and display screen 41 with the input system 100 shown in Fig. 9, wherein
Fig. 10A shows the display region 310 in the initial state thereof;
Fig. 10B shows a state wherein the region to be operated shown in Fig. 10A has had the position thereof switched;

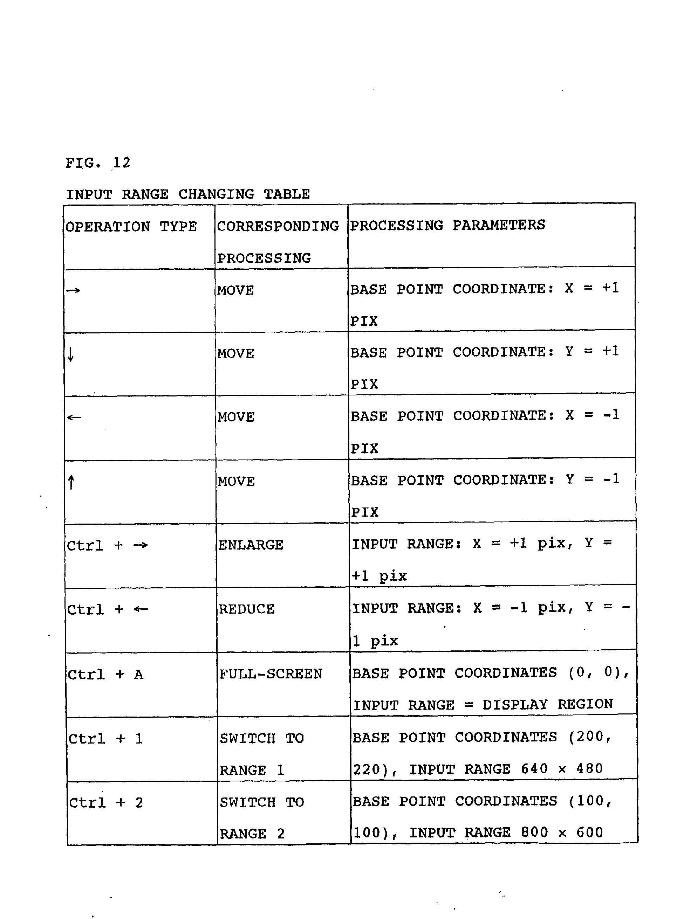

Fig. 11 is a diagram illustrating a schematic configuration of an input system 200 according to a third embodiment to which the present invention has been applied;
Fig. 12 is a diagram illustrating, in model fashion, the configuration of an input range changing table 243 applied to the input system 200 shown in Fig. 11;

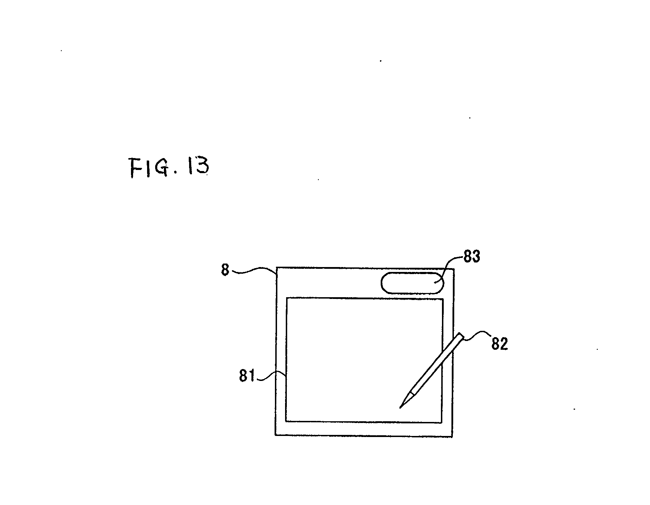

Fig. 13 is a diagram illustrating the schematic configuration of a tablet 8, as an example of a tablet which is used instead of the tablet 7 in the above embodiments;
Fig. 14 is a diagram illustrating a settings screen 90 as an example of a settings screen for setting a region to be operated, with a computer to which a conventional pen tablet has been connected; and
Fig. 15 is a diagram illustrating a detailed settings screen 95 as an example of a settings screen for setting a region to be operated, with a computer to which a conventional pen tablet has been connected.

### DESCRIPTION OF THE PREFERRED EMBODIMENTS

### First Embodiment

Fig. 1 is a diagram illustrating a schematic configuration of an input system 1 according to a first embodiment of the present invention. The configuration of the upper face of the input device 6 and the tablet 7 are shown in Fig. 1.

As shown in Fig. 1, the input system 1 is configured by connecting a display 3, a keyboard 5, an input device 6, and a tablet 7, to a computer 2. Of these, the keyboard 5, input device 6, and tablet 7, are each connected to the computer 2 by a serial interface such as USB (Universal Serial Bus) or RC-232C, an interface conforming to standards such as PS/2 or the like, or some other like interface.

The display 3 comprises a display screen 31 such as a CRT (Cathode Ray tube), LCD (Liquid Crystal Display), etc., and performs various types of display output based on the display information input from the later-described computer 2. Note that the display 3 is connected to the computer 2 via an interface conforming to standards such as D-Sub, BNC, DVI, DFP, etc., and the signals input to the display 3 from the computer 2 may be either analog signals or digital signals.

The keyboard 5 comprises multiple key switches, such as numeral keys with the numbers 1 through 0, character keys with the letters of the alphabet and other symbols, the arrow keys "→", "←", "↑", "↓" the escape key "Esc", the Alternate key "alt", the Control key "Ctrl", and other such various types of function keys and so forth. Upon a user pressing one of the keys, the keyboard 5 generates an operation signal indicating the key which was operated, which is output to the computer 2.

The input device 6 is configured of an inputting wheel 61, inputting ball 62, and a key input portion 63.

The inputting wheel 61 is a ring-shaped wheel rotatably fixed to the main unit of the input device 6, and the input device 6 has a rotation detecting unit (not shown) for detecting rotation of the inputting wheel 61. The inputting device generates operating signals indicating the direction of rotation of the inputting wheel 61 which has been detected by the rotation detecting unit each time the inputting wheel 61 is rotated by a certain amount by the user, and outputs the signals to the computer 2.

The inputting ball 62 is a ball embedded into the main unit of the input device 6 so as to be capable of rotating in arbitrary directions, and the input device 6 comprises a rotating detecting unit (not shown) for detecting the direction and amount of rotation of the inputting ball 62. The inputting device 6 generates operating signals indicating the direction of rotation of the inputting ball 62 which has been detected by the rotation detecting unit each time the inputting ball 62 is rotated by a certain amount by the user, and outputs the signals to the computer 2.

Now, examples of the rotation detecting unit for the inputting ball 62 which the input device 6 has include an arrangement for detecting the amount of rotation of the inputting ball 62 in the horizontal direction and in the vertical direction, by a rotary encoder, optical sensor, or the like. That is, even in the event that the inputting ball 62 is rotated diagonally with respect to the casing of the input device 6, the rotation detecting unit of the inputting ball 62 which the input device 6 has detects the amount of rotation of the inputting ball 62 in the vertical direction and the horizontal direction, and generates operating signals indicating the amount of rotation in the vertical direction and in the horizontal direction, which are output to the computer 2.

Further, the key input portion 63 is configured having multiple key switches, and upon one of the key switches being pressed, the input device 6 generates operating signals corresponding to the pressed key switch, which are output to the computer 2.

The tablet 7 is configured of a plate-shaped main unit with an operating region 71 provided thereto, and an inputting pen 72 used by bringing into the proximity of the main unit or into contact therewith. Upon operations being performed on the operating region 71 by the inputting pen 72, the tablet 7 detects the position of the inputting pen 72 on the operating region 71, generates operating signals indicating the position that has been detected, which are output to the computer 2. Also, in the event that the inputting pen 72 comprises a button, the tablet 7 generates operating signals indicating operation of the button according to the button being operated, which are output to the computer 2.

Fig. 2 is a block diagram illustrating the functional configuration of the computer 2 shown in Fig. 1.

As shown in Fig. 2, the computer 2 comprises a CPU (Central Processing Unit) 21, ROM (Read-Only Memory) 22, RAM (Random Access Memory) 23, a storage unit 24, an input unit 25, and a display unit 26, with each of these components being connected by a bus 27.

The CPU 21 reads out a system program stored in the ROM 22 or the storage unit 24 at the time of starting up the computer 2, develops the system program in the work area in the RAM 23 and executes the program, and causes transition of the components of the computer 2 and the devices connected to the computer 2 to the initial states thereof. The CPU 21 also controls the input unit 25 to judge whether or not the input devices which are the keyboard 5, input device 6, and the tablet 7, are connected to the computer 2, reads out the device drivers corresponding to the input devices connected to the computer 2 from the device drivers (not shown) stored in the storage unit 24 and executes the drivers, and then goes to a standby state for waiting for input operations from the input devices.

Then, upon the keyboard 5, input device 6, or tablet 7 being operated by the user, the CPU 21 obtains the contents of input by the processing of the device driver (not shown) being executed, and reads out and executes a corresponding application program from the storage unit 24.

Further, the CPU 21 generates display information for displaying an initial screen based on the system program being executed, an operating screen for an application program being executed, contents of input operations from the keyboard 5, input device 6, or tablet 7, outputs the display information to the display unit 26, and displays the screen on the display screen 31 of the display 3.

Also, in the event that operating signals are input from the input unit 25 in a state wherein the tablet 7 is usable, judgment is made regarding whether or not the operating signals are normal operations at the tablet 7. In the event that the operating signals are signals indicating normal operations at the tablet 7, input range information 241 stored in the storage unit 24 is obtained, and input data at the region to be operated corresponding to the operating region 71 of the tablet 7 is generated based on the input range information 241, which is output to the application program being executed.

Further, in the event that the operating signals input from the input unit 25 are not signals indicating normal operations at the tablet 7, an input range changing table 242 stored in the storage unit 24 is obtained. The CPU 21 then updates the input range information 241 based on the input range changing table 242, and further generates new display information which is output to the display unit 26, thereby updating the screen displayed on the display screen 31.

The ROM 22 is configured of a non-volatile semiconductor memory device or the like, and stores system program and the like which are executed by the CPU 21, in a format so as to be readable by the CPU 21.

The RAM 23 forms a work area for temporarily holding programs processed by the CPU 21, data relating to the programs, and so forth.

The storage unit 24 is configured comprising a storage device (not shown) made up of a magnetic or optical recording medium or a semiconductor memory device or the like, with various types of programs processed by the CPU 21, data relating to the programs, and so forth, being stored in the storage medium (not shown) in a format so as to be readable by the CPU 21.

Note that while examples of the storage recording medium may include detachable media such as CD-ROMs or the like, or fixed media such as hard disks or the like, the storage medium may be mounted to another computer connected to the computer 2 via a network, and made accessible from the CPU 21 via the network.

Also, the input range information 241 and the input range changing table 242 are stored in the storage unit 24. The input range information 241 and the input range changing table 242 will now be described in detail.

Note that with the present embodiment, the term "input range" refers to a range to be operated which is situated on a screen, corresponding to the operating range 71 on the tablet 7.

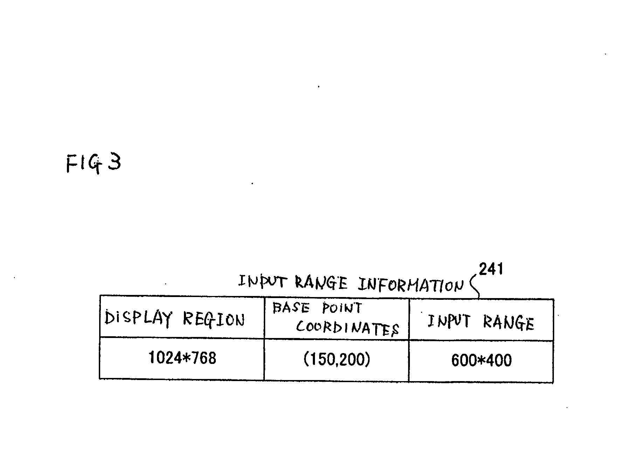

Fig. 3 is a diagram illustrating the configuration of the input range information 241 in model fashion. As shown in Fig. 3, the input range information 241 is made up of information indicating a display region displayed on the display screen 31 of the display 3, and information indicating the position and size of the region to be operated corresponding to the operating range 71 on the tablet 7.

Also, with the present embodiment, the screen displayed on the display screen 31 is controlled by a coordinates system in increments of pixels. The coordinates system has the upper left corner of the screen as the originating point thereof, with the direction toward the right as the positive direction of the X axis and the direction downwards as the positive direction of the Y axis, and generally is called a physical coordinates system or a screen coordinates system.

The input range information 241 has information set for each of the items "display region", "base point coordinates", and "input coordinates".

The number of pixels in the X-axial direction and the Y-axial direction are set in the item "display information", as information indicating the size of the display region displayed in the display screen 31. In the example shown in Fig. 3, the display region displayed in the display screen 31 is set as 1024 pixels in the horizontal (X-axial) direction by 768 pixels in the vertical (Y-axial) direction.

The position of the point of origin of the region to be operated within the display region is set in the "base point coordinates" item, as information specifying the position of the region to be operated, corresponding to the operating region 71. Here, the point of origin of the region to be operated means the upper left corner of the region to be operated. In the example shown in Fig. 3, the base point coordinates are set at (150, 200), setting the coordinates (150, 200) for the upper left corner of the region to be operated.

Further, the number of pixels in the X-axial direction and the Y-axial direction of the region to be operated are set in the "input range" information as information specifying the size of the region to be operated corresponding to the operating region 71. In the example shown in Fig. 3, the input range size is 600 pixels in the horizontal (X-axial) direction by 400 pixels in the vertical (Y-axial) direction.

In this way, the input range information 241 is information for deciding the position where the region to be operated corresponding to the operating region 71 of the tablet 7 is to be situated, and the size of the region to be operated.

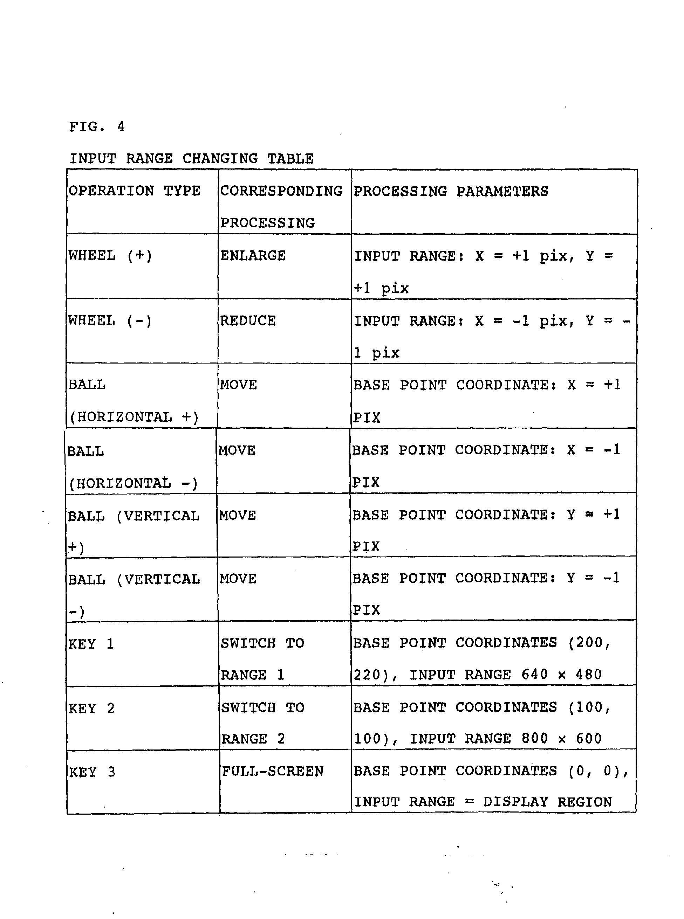

Fig. 4 is a diagram illustrating the configuration of the input range changing table 242, in model fashion. Set in the input range changing table 242 is information for changing the information relating to the region to be operated that is set in the input range information 241, by operations made at the input device 6.

Information is set in the input range changing table 242 with regard to the items of "operation type", "corresponding processing", and "processing parameters".

Of these, the contents of the operations made at the input device 6 are set in the "operation type" item, the type of processing to be performed with regard to the region be operated is set in the "corresponding processing ", and specific processing contents as to the information set in the input range information 241 are set in the "processing parameter" item.

For example, the inputting wheel 61 which the input device 6 has can be rotated in either the positive (+) direction or the negative (-) direction, so operations for rotating the inputting wheel 61 in the positive direction are set in the "operation type" of the input range changing table 242 shown in Fig. 4 as "wheel (+)", and operations for rotating the inputting wheel 61 in the negative direction are set as "wheel (-)".

Further, "enlarge" and "reduce" are set in the "corresponding processing", corresponding to "wheel (+)" and "wheel (-)". That is to say, processing for enlarging or reducing the region to be operated according to the direction of rotation is set to the operations of rotating the inputting wheel 61.

The item "processing parameters" corresponding to "wheel (+)" is set to "input range: X = 1 pix, Y = 1 pix". Here, "pix" means "pixel". That is, processing for incrementing the information set to the "input range" item in the input range information 241 by one pixel in the X-axial direction and the Y-axial direction is correlated with the operations of rotating the inputting wheel 61 in the positive direction. Thus, each time the inputting wheel 61 is rotated in the positive direction, the size of the region to be operated is enlarged in the X-axial direction by 1 pixel and in the Y-axial direction by 1 pixel.

The item "processing parameters" corresponding to "wheel (-)" is set to "input range: X = -1 pix, Y = -1 pix". That is, processing for decrementing the information set to the "input range" item in the input range information 241 by one pixel in the X-axial direction and the Y-axial direction is correlated with the operations of rotating the inputting wheel 61 in the negative direction. Thus, each time the inputting wheel 61 is rotated in the negative direction, the size of the region to be operated is reduced in the X-axial direction by 1 pixel and in the Y-axial direction by 1 pixel.

In this way, the region to be operated can be enlarged to reduced by the operations of the inputting wheel 61, according to the set contents of the input range changing table 242 shown in Fig. 4.

Also, for example, the inputting ball 62 can be rotated in arbitrary directions, with the input device 6 detecting the amount of rotation in the horizontal direction and vertical direction of the inputting ball 62, as well as detecting the direction of operation as well. Accordingly, the operations of the inputting ball 62 are detected as four types of operations, i.e., the positive and negative directions vertically, and the positive and negative directions horizontally.

Accordingly, the four types of operations "ball (horizontal +)", "ball (horizontal -)", "ball (vertical +)", and "ball (vertical -)", are set as operations for the "operation type" in the input range changing table 242 shown in Fig. 4, for rotating the inputting ball 62. Further, "move" is set to the "corresponding processing" corresponding to these four types of processing. That is to say, processing for moving the region to be operated is set with regard to the operations of rotating the inputting ball 62.

The "processing parameter" corresponding to "ball (horizontal +)" is set as "base point coordinate: X = +1 pix". Accordingly, the "base point coordinates" of the input range information 241 are changed to a value wherein the value in the X-axial direction has been incremented by 1 pixel by rotating the inputting ball 62 in the horizontal positive direction, and consequently, the region to be operated is moved by one pixel to the right, which is the X-axial direction on the screen.

In the same way, the "processing parameter" corresponding to "ball (horizontal -)" is set as "base point coordinate: X = -1 pix". Accordingly, the "base point coordinates" of the input range information 241 are changed to a value wherein the value in the X-axial direction has been decremented by 1 pixel by rotating the inputting ball 62 in the horizontal negative direction, and consequently, the region to be operated is moved by one pixel to the left, i.e., -1 pixel in the X-axial direction on the screen.

Also, the "processing parameter" corresponding to "ball (vertical +)" is set as "base point coordinate: Y = +1 pix". Accordingly, the "base point coordinates" of the input range information 241 are changed to a value wherein the value in the Y-axial direction has been incremented by 1 pixel by rotating the inputting ball 62 in the vertical positive direction, and consequently, the region to be operated is moved by one pixel downwards, which is the Y-axial direction on the screen.

In the same way, the "processing parameter" corresponding to "ball (vertical -)" is set as "base point coordinate: Y = -1 pix". Accordingly, the "base point coordinates" of the input range information 241 are changed to a value wherein the value in the Y-axial direction has been decremented by 1 pixel by rotating the inputting ball 62 in the horizontal negative direction, and consequently, the region to be operated is moved by one pixel upwards, i.e., -1 pixel in the Y-axial direction on the screen.

In this way, according to the contents of the settings in the input range changing table 242 shown in Fig. 4, the region to be operated can be changed by operations of the inputting ball 62. Also, the input range changing table 242 only sets processing for increasing or decreasing the "base point coordinates" of the input range information 241 in the X-axial direction and the Y-axial direction, as processing from operating the inputting ball 62, but in the event that the inputting ball 62 is rotated in a diagonal direction, for example, the amount of rotation is resolved into rotation amounts in the vertical direction and horizontal direction and detected. The "base point coordinates" of the input range information 241 is then moved in the X-axial direction and the Y-axial direction, corresponding to the rotation amounts in the vertical direction and horizontal direction, and consequently, the region to be operated is moved diagonally. That is to say, rotating the inputting ball 62 allows the region to be operated to be moved so as to correspond to the direction of rotation, following contents of settings in the input range changing table 242.

Also, for example, the key input portion 63 of the input device 6 has multiple keys, so the operations of the keys of the key input portion 63 are set in the "operation type" of the input range changing table 242 shown in Fig. 4, as "key 1", "key 2", "key 3", and so forth.

The "corresponding processing" corresponding to "key 1" of these is set to "switch to range 1", and the "processing parameters" thereof are set to "base point coordinates (200, 220), input range 640 × 480".

Accordingly, upon the "key 1" of the key input portion 63 being operated, the base point coordinates of the input range information 241 are set to the coordinates (200, 220) and the input range is set to 640 × 480 pixels, regardless of the base point coordinates and input range already set to the input range information 241 beforehand.

That is to say, the processing corresponding to "key 1" is processing for switching the position and size of the region to be operated to values set as a "range 1".

In the same way, the "corresponding processing" corresponding to "key 2" is set to "switch to range 2", and the "processing parameters" thereof are set to "base point coordinates (100, 100), input range 800 × 600". Accordingly, upon the "key 2" of the key input portion 63 being operated, the base point coordinates of the input range information 241 are set to the coordinates (100, 100) and the input range is set to 800 × 600 pixels, regardless of the base point coordinates and input range already set to the input range information 241 beforehand.

That is to say, the processing corresponding to "key 2" is processing for switching the position and size of the region to be operated to values set as "range 2".

Further, the "corresponding processing" corresponding to "key 3" is set to "full-screen", and the "processing parameters" thereof are set to "base point coordinates (0, 0), input range = display region".

Accordingly, upon the "key 3" of the key input portion 63 being operated, the base point coordinates of the input range information 241 are set to the coordinates (0, 0) and the input range is set to the same values as the display region of the input range information 241, regardless of the base point coordinates and input range already set to the input range information 241 beforehand.

Due to this processing, the position and size of the region to be operated becomes the same as that of the display region. That is to say, the processing corresponding to "key 3" is processing for setting the entire display region as the region to be operated.

In this way, according to the input range changing table 242 shown in Fig. 4, the region to be operated can be switched to a preset position and size by operating keys of the key input portion 63.

It should be noted that the contents of the settings of the input range changing table 242 shown in Fig. 4 are only examples for illustrative purposes, and the present invention is by no means restricted to these. For example, in the event that the key input portion 63 has a greater number of keys, it is needless to mention that processing corresponding to those keys may be set as well, and further, it is needless to mention that processing corresponding to operations of the inputting wheel 61 and the inputting ball 62 may be replaced with other types of operations.

Also, an arrangement may be made wherein multiple sets of positions and sizes of the region to be operated are stored beforehand, with the position and size of the region to be operated being switched to one of the multiple present values by operating the key input portion 63. In this case, the key input portion 63 may also be used to alternately switch between two regions to be operated.

The keyboard 5, input device 6, and tablet 7, each shown in Fig. 1, are connected to the input unit 25 shown in Fig. 2 with the above-mentioned various types of interfaces, and the input unit 25 outputs the operating signals input from the keyboard 5, input device 6, and tablet 7, to the CPU 21, along with code indicating the device which has output the operating signals.

The display unit 26 is connected to the display 3 shown in Fig. 1 via an interface conforming to standards such as D-Sub, BNC, DVI, DFP, etc. The display unit 26 generates plotting signals based on the display information input from the CPU 21, which are output to the display 3, so that a screen following the plotting signals is displayed on the display screen 31 of the display 3.

Fig. 5 is a flowchart illustrating the operations of the computer 2 according to the first embodiment.

In the processing shown in Fig. 5, the CPU 21 first makes transition to a standby state for input of operating signals from the keyboard 5, input device 6, or tablet 7 (step S1). Here, upon operating signals being input from the keyboard 5, input device 6, or tablet 7 (YES in step S1), the CPU 21 judges whether or not the input operating signals indicate normal operations at the tablet 7 (step S2).

Now, in the event that the input operating signals indicate normal operations at the tablet 7 (YES in step S2), the CPU 21 obtains input range information 241 stored in the storage unit 24 (step S3), and generates input data following the obtained input range information 241 (step S4).

In this step S4, the CPU 21 performs processing such as converting the coordinates of the inputting pen 72 in the operating region 71 detected at the tablet 7 into coordinates on the region to be operated, for example.

Next, the CPU 21 outputs the input data generated in step S4 to an application program currently being executed (step S5), the processing is ended, and the flow returns to step S1.

On the other hand, in the event that the input operating signals do not indicate normal operations at the tablet 7 in step S2, the CPU 21 obtains the input range changing table 242 stored in the storage unit 24 (step S6).

The CPU 21 then decides the contents of operation by analyzing the input operating signals, and judges whether or not the contents of operations that have been decided upon are set in the input range changing table 242 (step S7).

In the event that the contents of operations are not set in the input range changing table 242 as "operation type" (NO in step S7), the CPU 21 voids the operation and returns to step S1.

Also, in the event that the contents of operations have been set in the input range changing table 242 as "operation type" (YES in step S7), the CPU 21 changes the contents of the input range information 241 stored in the storage unit 24 following the contents set as "processing parameters" in the input range changing table 242 in a manner correlated with the contents of the operations, and stores this again in the storage unit 24 (step S9).

Further, the screen displayed on the display screen 31 of the display 3 is updated to a screen based on the input range information 241 updated by the CPU 21 in step S9 (step S10), the processing ends, and the flow returns to step S1.

This processing shown in Fig. 5 can be readily realized by executing the processing in steps S3 through S5 with a driver program, and executing the steps S1, S2, and S6 through S10 with a resident program.

Figs. 6A through 6C are diagrams illustrating the change in the region to be operated in the display region 301 displayed on the display screen 31, wherein Fig. 6A shows a region to be operated 303 in the initial state thereof, Fig. 6B shows a state wherein the region to be operated 303 shown in Fig. 6A has been enlarged and changed into a region to be operated 304, and Fig. 6C shows a state wherein the region to be operated 303 shown in Fig. 6A has been reduced and changed into a region to be operated 305.

In Fig. 6A, the region to be operated 303 is a region operated by the tablet 7 in the display region 301, with a pointer 302 which moves according to operations at the tablet 7 being displayed within the region to be operated 303.

Here, in the event that operations for instructing enlarging of the region to be operated 303 are performed as with the operations for "wheel (+)" set in the input range changing table 242 shown in Fig. 4, for example, the region to be operated 303 is enlarged, and a larger region to be operated is formed as with the region to be operated 304 shown in Fig. 6B.

On the other hand, in the sate of the display region 301 shown in Fig. 6A displayed on the display screen 31, in the event that operations for instructing reducing of the region to be operated 303 are performed as with the operations for "wheel (-)" set in the input range changing table 242 shown in Fig. 4, for example, the region to be operated 303 is reduced, and a smaller region to be operated is formed as with the region to be operated 305 shown in Fig. 6C.

Figs. 7A and 7B are diagrams illustrating the change in the region to be operated in a display region 301 displayed on a display screen 31, wherein Fig. 7A shows a region to be operated 306 in the initial state thereof, and Fig. 7B shows a state wherein the region to be operated 306 shown in Fig. 7A has been moved and changed into a region to be operated 307.

In Fig. 7A, the region to be operated 306 is a region operated by the tablet 7 in the display region 301, with a pointer 302 which moves according to operations at the tablet 7 being displayed within the region to be operated 306.

Here, in the event that operations for instructing moving the region to be operated 306 in the X-axial direction are performed as with the operations for "ball (horizontal +)" set in the input range changing table 242 shown in Fig. 4, for example, the region to be operated 306 is moved in the X-axial direction and becomes the region to be operated 307 so the display region 301 is as shown in Fig. 7B.

Figs. 8A and 8B are diagrams illustrating the change in the region to be operated in a display region 301 displayed on a display screen 31, wherein Fig. 8A shows a region to be operated 308 in the initial state thereof, and Fig. 8B shows a state wherein the region to be operated 308 shown in Fig. 8A has had the position and the size thereof switched and changed into a region to be operated 309.

In Fig. 8A, the region to be operated 308 is a region operated by the tablet 7 in the display region 301, with a pointer 302 which moves according to operations at the tablet 7 being displayed within the region to be operated 308.

Here, in the event that operations for instructing switching the position and size of the region to be operated 308 are performed as with the operations for "key 1" set in the input range changing table 242 shown in Fig. 4, for example, the region to be operated 308 is switched to the region to be operated 309 having a different position and size, as shown in Fig. 8B.

As described above, with the input system 1 to which the first embodiment of the present invention has been applied, in a state wherein the tablet 7 is connected to the computer 2 and a region to be operated that corresponds to the operating region 71 is situated on a screen displayed on the display screen 31, the position and size of the region to be operated on the display screen can be changed by operations made by the inputting wheel 61, the inputting ball 62, or the key input portion 63, which belong to the input device 6.

Also, in the input range information 241, the position and size of the region to be operated is set in a manner corresponding to the "key 1" or "key 2" of the key input portion 63. Accordingly, the position and size of the region to be operated can be optimized with a simple key operation at the key input portion 63, by setting the optimal position and size of the region to be operated in the input range information 241 beforehand.

Thus, with a computer 2 to which a tablet 7 is connected, the tablet 7 can be used while arbitrarily changing the region to be operated which corresponds to the operating region 71, so the position and size of the region to be operated are essentially unrestricted. Accordingly, the freedom of the region to be operated is markedly increased, and ease-of-use for using the tablet 7 can be improved.

Now, the above embodiment has been described as a n arrangement wherein the region to be operated that corresponds to the operating region 71 of the tablet 7, i.e., the input range, is a rectangular region, but the present invention is not restricted to such an arrangement; rather, the region to be operated may be formed as a circle, ellipse, or polygon of any type, so long as the form matches the form of the operating region 71 or the region to be operated with the inputting pen 72.

Also, with regard to the processing for enlarging or reducing the region to be operated in the display region, only the size of the region to be operated has been described as being enlarged or reduced without moving the base point coordinates thereof, but the present invention is by no means restricted to such processing; rather, arrangements may be made wherein the region to be operated is enlarged or reduced with the pointer displayed within the region to be operated as the center of enlargement or reduction, or wherein the center of the display region is the center of enlargement or reduction, as a matter of course.

Further, it is needless to mention that an arrangement may be made wherein the tablet 7 and display 3 are formed integrally, so that the display surface of the display 3 functions as the operating region 71 of the tablet 7, so that operations of the inputting pen 72 on the screen are detected in the same manner as with the operations in the operating region 71, and operating signals are output to the computer 2, may be made, and that the specific configuration such as the types and number of keys on the keyboard 5, the number of keys arranged on the key input portion 63 of the input device 6, and so forth, are arbitrary, and that other detailed configurations may also be changed as suitable.

### Second Embodiment

Next, an input system 100 to which a second embodiment of the present invention has been applied, will be described.

As shown in Fig. 9, the input system 100 according to the second embodiment is configured by further connecting a display 4 to the computer 2 in the input system 1 according to the above-described first embodiment. That is to say, with the input system 100, the computer 2 has a multi-display configuration wherein two displays, display 3 and display 4, are connected.

In the input system 100, the components except for the display 4 are of the same configuration as the input system 1 in the above first embodiment, so these components will be denoted with the same reference numerals, and description thereof will be omitted.

As with the display 3, the display 4 comprises a display screen 41 such as a CRT or LCD, etc., and performs various types of display output based on the display information input from the later-described computer 2. Note that the display 4 is connected to the computer 2 via an interface conforming to standards such as D-Sub, BNC, DVI, DFP, etc., and the signals input to the display 4 from the computer 2 may be either analog signals or digital signals.

With the input system 100, a continuous display region which is long sideways can be displayed by being divided between the display screen 31 and the display screen 41.

Figs. 10A and 10B are diagrams illustrating the region to be operated 310 displayed on the display screen 31 and display screen 41 with the input system 100, wherein Fig. 10A shows the display region 310 in the initial state thereof, and Fig. 10B shows a state wherein the region to be operated shown in Fig. 10A has had the position thereof switched.

As shown in Fig. 10A, the display region 310 is a display region which is long sideways, and is divided into a first display region 311 and a second display region 312 at the center. Of these, the first display region 311 is displayed on the display screen 41, and the second display region 312 is displayed on the display screen 31.

In the initial state shown in Fig. 10A, the region operated by the tablet 7 is the first display region 311, and the pointer 313 acting in a manner corresponding to the operations of the tablet 7 is displayed within the first display region 311.

In this way, with the input system 100 having the display screen 31 and the display screen 41, the region to be operated which is operated by the tablet 7 can be changed by operations made at the input device 6, as with the input system 1 according to the above first embodiment.

For example, in the state that the display region 310 shown in Fig. 10A is displayed on the display screen 31 and the display screen 41, making predetermined operations at the input device 6 changes the state of the display region 310 to that shown in Fig. 10B.

With the display region 310 shown in Fig. 10B, the region to be operated that is operated by the tablet 7 is the second display region 312, and the pointer 313 is displayed within the second display region 312.

That is, as shown in Figs. 10A and 10B, with the input system 100, the region to be operated in the display region 310 can be switched from the first display region 311 to the second display region 312.

Thus, with the multi-display configuration input system 100 having multiple displays, the region wherein operations are made by the tablet 7 can be switched between the first display region 311 and the second display region 312, i.e., between the display screen 31 and display screen 41. Accordingly, the region to be operated which is operated by the tablet 7 can be arbitrarily switched so as to sufficiently make use of a wide display area, thereby further improving the ease-of-use for using the tablet 7.

Note that with the input system 100 shown in Fig. 9, the tablet 7 may be formed integrally with one of the display 3 or display 4, so that the display surface of the display 3 or display 4 functions as the operating region 71 of the tablet 7, so that operations of the inputting pen 72 on the screen are detected in the same manner as with the operations in the operating region 71, and operating signals are output to the computer 2. In this case, an input system with even more advanced ease-of-use can be realized, using multiple displays with different configurations.

### Third Embodiment

Next, an input system 200 to which a third embodiment of the present invention has been applied, will be described.

As shown in Fig. 11, the input system 200 according to the third embodiment is configured by only the keyboard 5 and tablet 7 being connected to the computer 2. That is to say, the input system 200 is a configuration the same as the input system 1 according to the first embodiment sans input device 6.

The input system 200 is of the same configuration as the input system 1 in the above first embodiment, except for missing the input device 6, so components making up the input system 200 will be denoted with the same reference numerals, and description thereof will be omitted.

As with the input system 1 in the above first embodiment, with the input system 200, the region to be operated which corresponds to the operating region 71 of the tablet 7 is situated in the display region of the display screen 31. Operations for changing the position and size of the region to be operated, in the display region displayed on the display screen 31, are performed from the keyboard 5.

Fig. 12 shows an example of an input range changing table 243 which is stored in the storage unit 24 of the computer 2. The input range changing table 243 shown in Fig. 12 is stored in the storage unit 24 instead of the input range changing table 242 shown in Fig. 4.

Information is set in the input range changing table 243 with regard to the items of "operation type", "corresponding processing", and "processing parameters".

Of these, the contents of the operations made at the keyboard 5 are set in the "operation type" item, the type of processing to be performed with regard to the region be operated is set in the "corresponding processing ", and specific processing contents as to the information set in the input range information 241 are set in the "processing parameter" item.

For example, the keyboard 5 has the four arrow keys "→", "←", "↑", and "↓", so operations of the arrow keys "→", "←", "↑", and "↓", are each set in the "operation type" of the input range changing table 243 shown in Fig. 12. "Move" is set for "corresponding processing", corresponding to the operations of these arrow keys "→", "←", "↑", and "↓".

The "processing parameters" corresponding operating the arrow key "→" is set to "base point coordinate: X = +1 pix". Accordingly, due to the processing of operating the arrow key "→" on the keyboard 5 changes the X-directional value of the "base point coordinates" of the input range information 241 to a value which has been incremented by one pixel, and consequently, the region to be operated moves one pixel to the right, which is the X-axial direction on the screen.

Also, the "processing parameters" corresponding operating the arrow key "↓" is set to "base point coordinate: Y = +1 pix". Accordingly, due to the processing of operating the arrow key "↓" on the keyboard 5 changes the Y-directional value of the "base point coordinates" of the input range information 241 to a value which has been incremented by one pixel, and consequently, the region to be operated moves one pixel downwards, which is the Y-axial direction on the screen.

Similarly, the "processing parameters" corresponding operating the arrow key "←" is set to "base point coordinate: X = -1 pix". Accordingly, due to the processing of operating the arrow key "←" on the keyboard 5 changes the X-directional value of the "base point coordinates" of the input range information 241 to a value which has been decremented by one pixel, and consequently, the region to be operated moves -1 pixel in the X-axial direction on the screen, which is one pixel to the left.

Further, the "processing parameters" corresponding operating the arrow key "↑" is set to "base point coordinate: Y = -1 pix". Accordingly, due to the processing of operating the arrow key "↑" on the keyboard 5 changes the Y-directional value of the "base point coordinates" of the input range information 241 to a value which has been decremented by one pixel, and consequently, the region to be operated moves -1 pixel in the Y-axial direction on the screen, which is one pixel upwards.

In this way, according to the contents of settings of the input range changing table 243 shown in Fig. 12, operating the four arrow keys "→", "←", "↑", and "↓", can move the region to be operated.

Also, the keyboard 5 has a "Ctrl" key serving as a function key, and this "Ctrl" key can be operated combined with other character or arrow keys. Simultaneous operation of the "Ctrl" key and the arrow keys "→" and "←", the character key "A", and the numeric keys "1" and "2", are each set in the "operation type" in the input range changing table 243 shown in Fig. 12.

Of these, "enlarge" and "reduce" are set in the "corresponding processing", corresponding to simultaneously pressing the "Ctrl" key and the arrow key "→" or arrow key "←". Accordingly, processing for enlarging or reducing the region to be operated according to the direction of rotation is set for the operations of simultaneously pressing the "Ctrl" key and the arrow key "→" or simultaneously pressing the "Ctrl" key and the arrow key "←".

The item "processing parameters" corresponding to simultaneously operating the "Ctrl" key and the arrow key "→" is set to "input range: X = +1 pix, Y = +1 pix". That is, processing for incrementing the information set to the "input range" item in the input range information 241 by one pixel in the X-axial direction and the Y-axial direction is correlated with the operations of simultaneously pressing the "Ctrl" key and the arrow key "→". Thus, each time the "Ctrl" key and the arrow key "→" are simultaneously operated, the size of the region to be operated is increased in the X-axial direction by 1 pixel and in the Y-axial direction by 1 pixel.

In the same way, the item "processing parameters" corresponding to simultaneously operating the "Ctrl" key and the arrow key "←" is set to "input range: X = -1 pix, Y =-1 pix". That is, processing for decrementing the information set to the "input range" item in the input range information 241 by one pixel in the X-axial direction and the Y-axial direction is correlated with the operations of simultaneously pressing the "Ctrl" key and the arrow key "←", so each time the "Ctrl" key and the arrow key "←" are simultaneously operated, the size of the region to be operated is decreased in the X-axial direction by 1 pixel and in the Y-axial direction by 1 pixel.

Further, the "corresponding processing" corresponding to simultaneously operating the "Ctrl" key and the character key "A" is set to "full-screen", and the "processing parameters" thereof are set to "base point coordinates (0, 0), input range = display region".

Accordingly, upon simultaneously operating the "Ctrl" key and the character key "A", the base point coordinates of the input range information 241 are set to the coordinates (0, 0) and the input range is set to the same values as the display region of the input range information 241, regardless of the base point coordinates and input range already set to the input range information 241 beforehand.

Due to this processing, the position and size of the region to be operated becomes the same as that of the display region. That is to say, the processing corresponding to simultaneously pressing the "Ctrl" key and the character key "A" is processing for setting the entire display region as the region to be operated.

Further, the "corresponding processing" corresponding to simultaneously pressing the "Ctrl" key and the numeric key "1" is set to "switch to range 1", and the "processing parameters" thereof are set to "base point coordinates (200, 220), input range 640 × 480".

Accordingly, upon simultaneously pressing the "Ctrl" key and the numeric key "1" on the keyboard 5, the base point coordinates of the input range information 241 are set to the coordinates (200, 220) and the input range is set to 640 × 480 pixels, regardless of the base point coordinates and input range already set to the input range information beforehand.

That is to say, the processing corresponding to simultaneously pressing the "Ctrl" key and the numeric key "1" is processing for switching the position and size of the region to be operated to values set as a "range 1".

In the same way, the "corresponding processing" corresponding to simultaneously pressing the "Ctrl" key and the numeric key "2" is set to "switch to range 2", and the "processing parameters" thereof are set to "base point coordinates (100, 100), input range 800 × 600". Accordingly, upon simultaneously pressing the "Ctrl" key and the numeric key "2" on the keyboard 5, the base point coordinates of the input range information 241 are set to the coordinates (100, 100) and the input range is set to 800 × 600 pixels, regardless of the base point coordinates and input range already set to the input range information 241 beforehand.

That is to say, the processing corresponding to simultaneously pressing the "Ctrl" key and the numeric key "2" is processing for switching the position and size of the region to be operated to values set as "range 2".

In this way, the region to be operated corresponding to the operating region 71 can be changed according to the key operations made at the keyboard 5, by setting the contents of processing corresponding to the keys of the keyboard 5 in the input range changing table 243 stored in the storage unit 24 of the computer 2.

Accordingly, the tablet 7 can be used while arbitrarily changing the region to be operated which corresponds to the operating region, even with the input system 200 which comprises only the keyboard 5 and tablet 7 connected to the computer 2 as input devices and does not use a device such as the input device 6 in the first embodiment, so the position and size of the region to be operated are essentially unrestricted. Accordingly, the freedom of the region to be operated is markedly increased, and ease-of-use for using the tablet 7 can be improved.

Also, it is needless to say that changing of the region to be operated is not restricted to the keyboard 5; rather, this may be carried out by, for example, a pointing device such as a mouse or the like, by changing the setting contents in the input range changing table 243. In this case, with a mouse having a scroll wheel for example, an arrangement may be made wherein the region to be operated is enlarged or reduced corresponding to the operations of the scroll wheel.

Also, an arrangement may be made wherein the region to be operated can be changed by performing special operations with the inputting pen 72 within the operating region 71 of the tablet 7, for example. That is, the tablet 7 may be of a configuration serving as both an input device for performing inputting operations to the region to be operated, and an input device for performing inputting operations relating to changing of the region to be operated.

Further, an arrangement may be made wherein operations can be made for changing the region to be operated, by changing the configuration of the tablet 7.

Fig. 13 is a diagram illustrating a schematic configuration of a tablet 8, as an example of a tablet used instead of the tablet 7 in the above embodiments.

The tablet 8 shown in Fig. 13 is configured of a plate-shaped main unit with an operating region 81 provided thereto, and an inputting pen 82 used by bringing into the proximity of the main unit or into contact therewith, and further comprises an auxiliary operating region provided to the main unit in close proximity to the operating region 81.

Upon operations being performed on the operating region 81 by the inputting pen 82, the tablet 8 detects the position of the inputting pen 82 on the operating region 81, generates operating signals indicating the position that has been detected, which are output to the computer 2, as with the tablet 7. Also, in the event that the operating region 81 comprises a button, the tablet 8 generates operating signals indicating operation of the button according to the button being operated, which are output to the computer 2.

Further, upon operations being performed on the auxiliary operating region 83 by the inputting pen 82, the tablet 8 detects the position of the inputting pen 82 on the auxiliary operating region 83, and generates operating signals different to the signals of the inputting pen 82 on the operating region 81, which are output to the computer 2.

Accordingly, with the computer 2 to which the tablet 8 is connected, the region to be operated can be changed by operating the auxiliary operating region 83, by corresponding processing such as enlarging, reducing moving, etc., of the region to be operated, with input operations at the auxiliary operating region 83. In this case, the region to be operated corresponding to the operating region 81 of the tablet 8 can be changed by operations at the auxiliary operating region 83, so the user can perform operations while changing the region to be operated simply by operating the tablet 8, thereby further improving the ease-of-use.

## Claims

1. An input system comprising:
a first input device for using a finite operating region to perform input operations to a region to be operated which is positioned on a display screen, correlated with said operating region;
a second input device for performing input operations different to input operation by said first input device; and
an input control device for changing the positioning state of said region to be operated on said display device, according to input operations by said second input device.

2. An input system according to Claim 1, wherein said input control device moves said region to be operated according to input operations by said second input device.

3. An input system according to Claim 1, wherein said input control device enlarges or reduces said region to be operated according to input operations by said second input device.

4. An input system according to Claim 1, wherein said input control device switches the position of said region to be operated to one of a plurality of positions set on said display screen beforehand, according to input operations by said second input device.

5. A program for causing a computer, to which are connected
a first input device for using a finite operating region to perform input operations to a region to be operated which is positioned on a display screen, correlated with said operating region, and
a second input device for performing input operations different to input operation by said first input device,
to execute input control processing for changing the positioning state of said region to be operated on said display screen, according to input operations by said second input device.

6. A program according to Claim 5, for causing execution of processing, as said input control processing, including processing for moving said region to be operated according to input operations by said second input device.

7. A program according to Claim 5, for causing execution of processing, as said input control processing, including processing for enlarging or reducing said region to be operated according to input operations by said second input device.

8. A program according to Claim 5, for causing execution of processing, as said input control processing, including processing for switching the position of said region to be operated to one of a plurality of positions set on said display screen beforehand, according to input operations by said second input device.

9. A recording medium storing a program according to any of the Claims 5 through 8.
